# EUROPÄISCHE PATENTSCHRIFT

(11) **EP 2 702 294 B1**
(45) Veröffentlichungstag und Bekanntmachung des Hinweises auf die Patenterteilung: **12.08.2015**
(21) Anmeldenummer: 12716441.6
(22) Anmeldetag: 25.04.2012
(51) Int. Cl.: F16D 66/00, F16D 55/00, F16D 121/22

(54) **VERBESSERTE ANORDNUNG ZUR SCHALTZUSTANDSÜBERWACHUNG FÜR FEDERDRUCKBREMSEN**
IMPROVED ARRANGEMENT FOR MONITORING THE SWITCHING STATE FOR SPRING-LOADED BRAKES
ENSEMBLE AMÉLIORÉ DE SURVEILLANCE DE L'ÉTAT DE COMMUTATION DE FREINS À RESSORT

(30) Priorität: 28.04.2011 DE 202011005655 U
(43) Veröffentlichungstag der Anmeldung: 05.03.2014
(73) Patentinhaber: Chr. Mayr GmbH + Co. KG, 87665 Mauerstetten (DE)
(72) Erfinder: BRAUN, Ludwig, 86857 Hurlach (DE); WEISS, Harald, 87677 Stöttwang (DE)
(74) Vertreter: Ruschke, Hans Edvard
(86) Internationale Anmeldenummer: PCT/EP2012/057536
(87) Internationale Veröffentlichungsnummer: WO 2012/146608

(56) Entgegenhaltungen:
- DE-U1- 29 510 246
- FR-A1- 2 898 169
- US-A- 4 020 454
- US-A- 5 421 436

## Beschreibung

Die Komplexität technischer Anlagen und der dazu gehörenden Steuerungen nimmt seit Jahren stetig zu.

Technische Anlagen sind dabei in der Regel aus einer Vielzahl von Einzelkomponenten aufgebaut, die heute in zunehmendem Maße über eigene interne Sensoren verfügen.

Über deren Signale werden inzwischen die einzelnen Verfahrensabläufe und Arbeitstakte der Anlage fast lückenlos überwacht und in der Anlagensteuerung verarbeitet.

Mögliche Einzelkomponenten der genannten technischen Anlagen sind elektromagnetisch betätigte Federdruckbremsen, die je nach Einsatzfall über mehrere interne Sensoren verfügen können, so beispielsweise über mechanische Mikroschalter oder berührungslose Näherungsschalter zur Überwachung des Schaltzustandes der Bremse.

Die Anordnung besagter Mikroschalter oder berührungsloser Näherungsschalter zur Schaltzustandsüberwachung elektromagnetisch betätigter Federdruckbremsen sowie Verbesserungen in der Anordnung derselben zur korrekten Justage dieser Schalter sind Gegenstand der vorliegenden Erfindung.

Elektromagnetisch betätigte Federdruckbremsen nach dem Stand der Technik arbeiten so, dass das Schließen bzw. Betätigen der Bremse durch Energiespeicher wie beispielsweise mechanische Federelemente erfolgt und die Bremse durch einen Elektromagneten gegen die Kraft der Federn geöffnet wird. Durch die Tatsache, dass eine hohe Kraft der Elektromagneten zur Überwindung der Federkräfte nur über sehr kurze Wege zur Verfügung steht, werden diese Bremsen so ausgelegt, dass das Betätigungselement, d. h. die sogenannte Ankerscheibe, beim Schließen und Öffnen der Bremse nur sehr kurze Wege zurücklegt.

Genau diese kurzen Wege von meist nur weniger als 0,5mm gilt es mit einer geeigneten Sensorik zu erfassen und an die Maschinensteuerung zu melden. Als Sensoren kommen dabei meist sogenannte mechanische Mikroschalter oder auch berührungslose Näherungsschalter zum Einsatz, deren Gehäuse in der Regel auf einem stationären Element der Bremse angebaut sind und die für eine sichere Signalerfassung positionsmäßig entsprechend genau justiert werden müssen.

Dazu haben sich nach dem Stand der Technik insbesondere bei mechanischen Mikroschaltern zwei grundsätzliche Systeme etabliert:
- Der Mikroschalter sitzt gehäuseseitig auf dem stationären Element der Bremse, wird dort bei der Justage über Langlöcher des Schaltergehäuses in Betätigungsrichtung des Schaltstößels verschoben und abschließend fixiert.
- Der Mikroschalter ist gehäuseseitig auf dem stationären Element der Bremse ortsfest angebaut und das Element zur Betätigung des Schaltstößels ist in Betätigungsrichtung verstellbar gestaltet; Ein solches Betätigungselement wird vielfach durch eine Schraube mit einer Kontermutter realisiert.

Beide genannten Verfahren erfordern beim Einstellen eine gute allseitige Zugänglichkeit der Federdruckbremse und viel Fingerspitzengefühl des Monteurs und es ist in der Regel nach der Justage erforderlich, diese nochmals durch Fühlerlehren oder geeignetes Spezialwerkzeug zu überprüfen.

Dokument FR 2 898 169 A offenbart eine Federdruckbremse nach dem Oberbegriff des Anspruchs 1.

Ziel der Erfindung ist es demnach, die Anordnung des Mikroschalters oder eines alternativen Näherungsschalters und damit die Justage der Schalter vor allem unter beengten Platzverhältnissen zu vereinfachen und die abschließende Kontrolle der Justage entbehrlich zu machen.

Erfingdungsgemäß wird dieses Ziel dadurch erreicht, dass der Mikroschalter oder Näherungsschalter fest an einem stationären Element der Bremse angebaut ist und die Betätigung des Schaltstößels über einen auf der Ankerscheibe der Bremse befindlichen verstellbaren Hebel realisiert wird, der das Widerlager bzw. den Referenzpunkt zum Angriff durch den Schalter trägt.

Dadurch wird eine Justage auch unter beengten räumlichen Verhältnissen von einer Seite her möglich, es werden die Feinfühligkeit und Sicherheit der Justage erhöht und es entfällt die Notwendigkeit einer abschließenden Kontrolle.

Weitere Details der erfindungsgemäßen Verbesserung der Justage von solchen Schaltern ergeben sich aus den weiteren Unteransprüchen der Erfindung.

Anhand der beigefügten Zeichnungen werden der Stand der Technik sowie zwei Ausführungsformen der erfindungsgemäßen Mikroschalter-Justage für ruhestrombetätigte Federdruckbremsen näher erläutert.

Dementsprechend zeigen:
- Fig. 1: die räumliche Darstellung einer ruhestrombetätigten elektromagnetischen Federdruckbremse FDB in konzentrischer Bauweise mit angebautem Mikroschalter und Mikroschaltereinstellung nach dem Stand der Technik,
- Fig. 1 A: einen Längs-Schnitt durch die vorbekannte Bauart der Bremse aus Fig. 1 mit einem Detail A,
- Fig. 2: die räumliche Darstellung einer ruhestrombetätigten elektromagnetischen Federdruckbremse FDB mit rechteckigem Spulenträger und mit einer erfindungsgemäßen Anordnung zur Justage des Mikroschalters über einen an der Ankerscheibe angeschraubten Hebel,
- Fig. 2 A: eine Draufsicht auf die Bremse aus Fig. 2,
- Fig. 2 B: einen zur Draufsicht in Fig. 2A parallelen Schnitt durch die Bremse,
- Fig. 3: die räumliche Darstellung einer ruhestrombetätigten elektromagnetischen Federdruckbremse FDB mit rechteckigem Spulenträger und mit einer erfindungsgemäßen Anordnung zur Justage des Mikroschalters über einen an der Ankerscheibe einteilig angeordneten Hebel,
- Fig. 3 A: eine Draufsicht auf die Bremse aus Fig. 3,
- Fig. 3 B: einen zur Draufsicht in Fig. 3A parallelen Schnitt durch die Bremse.

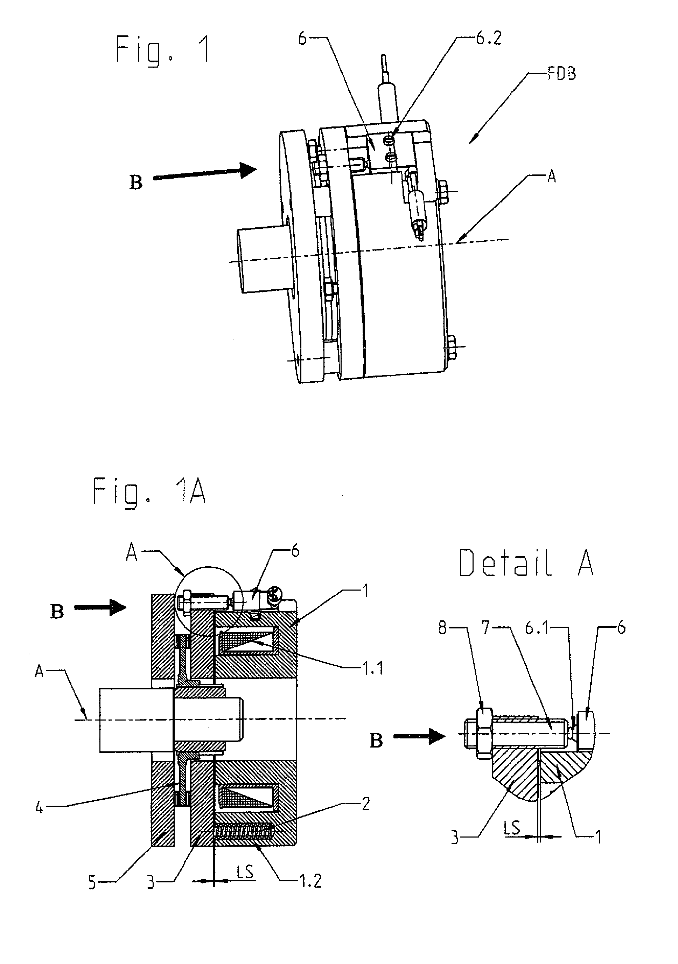

Fig. 1 zeigt zunächst die räumliche Darstellung einer herkömmlichen ruhestrombetätigten elektromagnetisch gelüfteten Federdruckbremse FDB in einer zur Rotationsachse A des Rotors 4 konzentrischen Bauweise mit angebautem Mikroschalter 6.

Gemäß Fig. 1A besteht die Bremse hier aus einem Spulenträger 1 mit integrierter Elektromagnetspule 1.1 und Federbohrungen 1.2 zur Aufnahme von Federn 2, die gegen eine drehfest und axial beweglich angeordnete Ankerscheibe 3 drücken und dadurch den Rotor 4 reibschlüssig zwischen Ankerscheibe 3 und der ortsfesten Flanschplatte 5 einspannen.

Die Federdruckbremse FDB wird in Fig. 1A in diesem gebremsten Zustand dargestellt und es ist der Luftspalt LS zu sehen, der vom Mikroschalter 6 zu detektieren ist. Zum Öffnen oder Lösen der Federdruckbremse FDB wird die Elektromagnetspule 1.1 bestromt, wodurch sich im Spulenträger 1 ein Elektromagnetfeld aufbaut, das die Ankerscheibe 3 gegen die Kraft der Federn 2 zum Spulenträger 1 zieht und somit die Einspannung des Rotors 4 zwischen Ankerscheibe 3 und Flanschplatte 5 aufhebt. Somit wird der Luftspalt LS = "Null" und der Rotor 4 ist um die Rotationsachse A frei drehbar.

Der in Fig. 1A sowie in Detail A dargestellte Mikroschalter 6 tastet dabei über den Schaltstößel 6.1 den Hub der in die Ankerscheibe 3 eingeschraubten und mit der Kontermutter 8 gesicherten Einstellschraube 7 ab, der gleich dem Luftspalt LS ist und gibt ein entsprechendes Signal an die Steuerung.

Die in Fig. 1, Fig. 1A und Detail A gezeigte und nachstehend beschriebene Montage und Justage des Mikroschalters 6 entspricht dabei der bevorzugten Vorgehensweise nach dem Stand der Technik.

Zunächst wird dabei der Mikroschalter 6 (oder auch der berührungslose Näherungsschalter) über die Befestigungsschrauben 6.2 fest mit dem Spulenträger 1 verbunden.

Die Justage erfolgt durch Verstellen der mit einem Gewinde in der Ankerscheibe 3 in Verbindung stehenden Einstellschrauben 7, über die der Schaltstößel 6.1 betätigt wird, und durch abschließendes Kontern mittels einer Kontermutter 8.

Nachteilig an der beschriebenen Vorgehensweise nach dem Stand der Technik sind die wenig feinfühlige Einstellmöglichkeit durch die Einstellschraube 7 und mögliche Verschiebungen der Einstellschraube 7 in Betätigungsrichtung B beim Sichern durch die Kontermutter 8, was meist eine abschließende Kontrolle der Justage erforderlich macht. Außerdem muss die Federdruckbremse FDB für die beschriebenen Justagearbeiten von allen Seiten gut zugänglich sein.

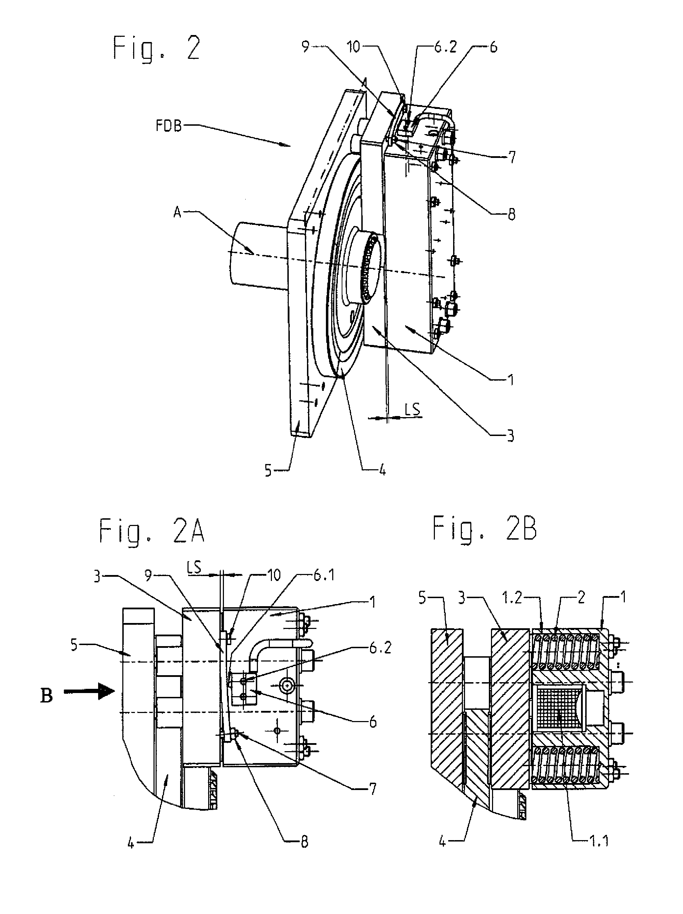

Fig. 2 zeigt die räumliche Darstellung einer weiteren (diesmal modular aufgebauten) Federdruckbremse FDB auf Basis eines zentralen Rotors 4 und eines zur Rotationsachse A des Rotors 4 parallel versetzten rechteckigen Spulenträgers 1 mit entsprechend zugeordneter rechteckiger Ankerscheibe 3.

Die grundsätzliche Funktion der dargestellten Federdruckbremse FDB entspricht dem Beispiel in Fig. 1, wobei auch hier wie aus Fig. 2B ersichtlich, der Rotor 4 durch in Federbohrungen 1.2 des Spulenträgers 1 liegende Federn 2 zwischen Ankerscheibe 3 und Flanschplatte 5 eingespannt wird, so dass sich der aus Fig. 2A ersichtliche Luftspalt LS bildet.

Das Öffnen der Federdruckbremse FDB wird auch hier wie eingangs bei Fig. 1 beschrieben durch Bestromen der Elektromagnetspule 1.1 realisiert, wodurch sich im Spulenträger 1 ein Elektromagnetfeld aufbaut, das die Ankerscheibe 3 gegen die Kraft der Federn 2 zum Spulenträger 1 zieht und somit die Einspannung des Rotors 4 zwischen Ankerscheibe 3 und Flanschplatte 5 aufhebt.

Somit wird der Luftspalt LS = "Null" und der Rotor 4 ist um die Rotationsachse A frei drehbar.

Auch hier erfolgt die Abtastung des Weges, der dem Luftspalt LS entspricht durch einen am Spulenträger 1 durch Befestigungsschrauben 6.2 fixierten Mikroschalter 6.

Das Widerlager zur Betätigung des Schaltstößels 6.1 des mechanischen Mikroschalters 6 oder der Referenzpunkt zur Kooperation mit dem berührungslosen Näherungsschalter ist erfindungsgemäß auf einen Hebel 9 verlagert, der verstellbar ist und im vorliegenden Beispiel an einem Ende durch eine Halteschraube 10 auf der Ankerscheibe 3 befestigt ist.

Am anderen Ende des Hebels 9 befindet sich eine Bohrung mit einem Innengewinde, das mit dem Außengewinde einer Einstellschraube 7 in Kontakt steht und wobei sich die Einstellschraube 7 mit einem Ende an der Ankerscheibe 3 abstützt. Durch Verdrehen der Einstellschraube 7 kann der Abstand zwischen dem Hebel 9 und der Ankerscheibe 3 verändert und damit der Ansprechpunkt des Mikroschalters 6 oder der Referenzpunkt des Näherungsschalters problemlos justiert werden.

Abschließend wird die Einstellschraube 7 durch die Kontermutter 8 gesichert. Ein Vorteil der beschriebenen erfindungsgemäßen Anordnung zur Justage des Mikroschalters 6 oder eines äquivalenten Näherungsschalters ist die erzielte Feinfühligkeit durch die Hebelübersetzung über die unterschiedlichen Abstände zwischen Haltschraube 10 und Schaltstößel 6.1 des Mikroschalters 6 einerseits sowie zwischen Halteschraube 10 und Einstellschraube 7 andererseits.

Ein weiterer Vorteil der erfindungsgemäßen Ausgestaltung des Referenzpunktes des Näherungsschalters bzw. des Widerlagers zur Justage des Mikroschalters 6 ist, dass sich eine abschließende Kontrolle der Korrektheit der durchgeführten Justage erübrigt, weil sich beim Anziehen der Kontermutter 8 die Lage zwischen Einstellschraube 7 und Hebel 9 durch dessen elastische Biegung nicht mehr verändert.

Beide Arbeitsschritte, sowohl die Justage der Einstellschraube 7 als auch das Anziehen der Kontermutter 8 sind mit geeigneten Steckschlüsseln auch unter beengten Einbauverhältnissen von der Stirnseite der Federdruckbremse FDB her möglich.

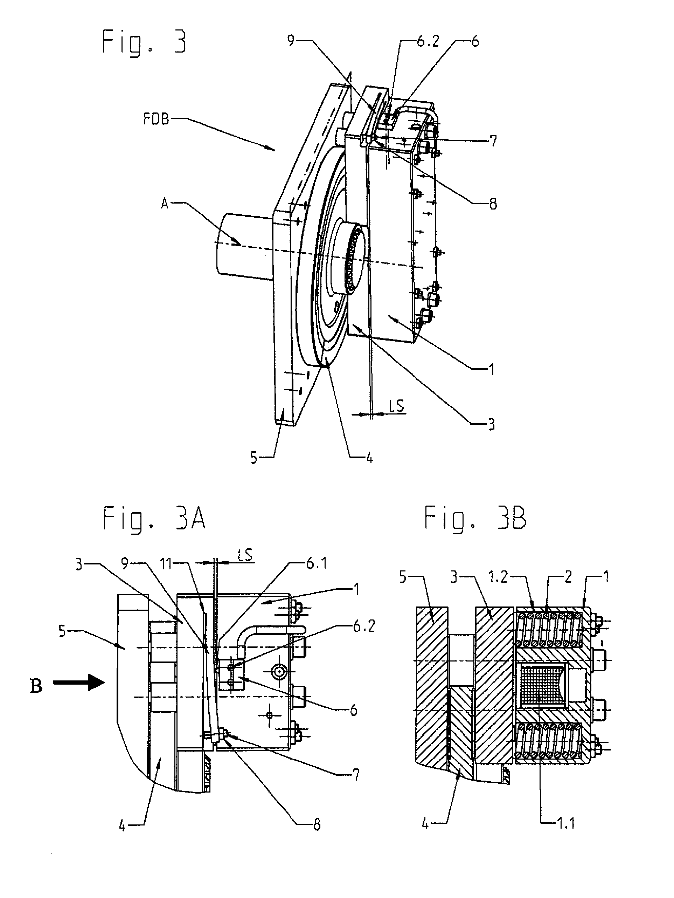

In Fig. 3 sowie in der Draufsicht in Fig. 3A und im Schnitt der Fig. 3B wird eine zweite Ausführungsform einer Federdruckbremse FDB mit einer erfindungsgemäßen Vorrichtung zur Justage des Mikroschalters 6 gezeigt. Im Gegensatz zu Fig. 2 und Fig. 2A ist bei Fig. 3 und Fig. 3A der Hebel 9 ohne eine Halteschraube 10 mit der Ankerscheibe 3 einteilig ausgeführt. Dies wird durch eine geeignete Schlitzstruktur 11 in der Ankerscheibe 3 erreicht, wodurch Bauraum und Kosten eingespart werden können und wodurch sich die Betriebssicherheit des Gesamtsystems nochmals erhöht.

Die in Fig. 2, Fig. 2A und Fig. 2B sowie in Fig. 3, Fig. 3A und Fig. 3B beschriebenen Ausführungsformen der erfindungsgemäßen verbesserten Anordnung zur Schaltzustandsüberwachung für Federdruckbremsen sind analog auch anwendbar auf ruhestrombetätigte elektromagnetische Federdruckbremsen, die eine grundsätzlich andere geometrische Form und/oder eine andere räumliche Zuordnung zwischen Spulenträger 1 und Rotor 4 aufweisen als die in der Beschreibung erläuterten Ausführungsbeispiele.

Dies gilt insbesondere dann, wenn diese Bremsen hinsichtlich des Zusammenwirkens zwischen Rotor 4, Ankerscheibe 3 und Spulenträger 1 sowie Elektromagnetspule 1.1 und Federn 2 der grundsätzlichen Funktionsweise der Federdruckbremsen in Fig. 2 und Fig. 3 entsprechen.

**Bezugszeichenliste:**

| | | |
|---|---|---|
| 1 | Spulenträger | |
| 1.1 | Elektromagnetspule | |
| 1.2 | Federbohrung | |
| 2 | Feder | |
| 3 | Ankerscheibe | |
| 4 | Rotor | |
| 5 | Flanschplatte | |
| 6 | mechanischer Mikroschalter/berührungsloser Näherungsschalter | |
| 6.1 | Schaltstößel | des Mikroschalters |
| 6.2 | Befestigungsschraube | des Mikroschalters |
| 7 | Einstellschraube | |
| 8 | Kontermutter | |
| 9 | Hebel | |
| 10 | Halteschraube | des Hebels |
| 11 | Schlitzstruktur | der Ankerscheibe |
| A | Rotationsachse | des Rotors |
| B | Betätigungsrichtung | des Schaltstößels |
| FDB | Federdruckbremse | |
| LS | Luftspalt | |

## Patentansprüche

1. Ruhestrombetätigte Federdruckbremse (FDB) mit einem abzubremsenden Rotor (4) und einer Anordnung zur Schaltzustandsüberwachung, wobei der bei einem Schaltzyklus der Federdruckbremse auftretende Axialhub der Ankerscheibe (3) der Federdruckbremse durch einen in die Federdruckbremse integrierten und fest mit dem stationären Teil der Federdruckbremse verbundenen mechanischen Mikroschalter (6) oder berührungslosen Näherungsschalter abgetastet wird, wobei der jeweilige Schalter mit einem Referenzpunkt an der Ankerscheibe (3) kooperiert, **dadurch gekennzeichnet, dass** der Referenzpunkt auf einem verstellbaren Hebel/Balken auf der Ankerscheibe angeordnet ist, der an seinem einen Ende fest mit der Ankerscheibe (3) der Federdruckbremse verbunden und an seinem entgegensetzten Ende in Bewegungsrichtung der Ankerscheibe verstellbar ausgebildet ist, und wobei der Referenzpunkt am Hebel/Balken zwischen seinen beiden Enden angeordnet ist.

2. Federdruckbremse (FDB) nach Anspruch 1,
**dadurch gekennzeichnet, dass** am entgegensetzten verstellbaren Ende des Hebels/Balkens eine in der Bewegungsrichtung der Ankerscheibe (3) verlaufende Gewindebohrung ausgebildet ist, in der eine verstellbare Einstellschraube vorgesehen ist, die die Stellung/Biegestellung des Hebels/Balkens in Abhängigkeit von der Einschraubstellung der Einstellschraube bestimmt.

3. Federdruckbremse (FDB) nach Anspruch 1 oder 2,
**dadurch gekennzeichnet, dass** der Hebel (9) an seinem einen Ende durch ein Befestigungselement, vorzugsweise eine Halteschraube (10), mit der Ankerscheibe (3) verbunden ist.

4. Federdruckbremse (FDB) nach Anspruch 1 oder 2,
**dadurch gekennzeichnet, dass** der Hebel (9) an seinem einen Ende durch ein Fügeverfahren, wie Schweißen, Bördeln oder Kleben mit der Ankerscheibe (3) verbunden ist.

5. Federdruckbremse (FDB) nach einem der voranstehenden Ansprüche,
**dadurch gekennzeichnet, dass** der Hebel (9) mit der Ankerscheibe (3) einteilig ausgeführt ist und der Hebel (9) durch eine Schlitzstruktur (11) der Ankerscheibe entsteht bzw. teilweise davon abgetrennt ist.

6. Federdruckbremse (FDB) nach einem der voranstehenden Ansprüche,
**dadurch gekennzeichnet, dass** die Federdruckbremse (FDB) durch einen Elektromagneten gegen die Kraft der Federn (2) geöffnet wird.

7. Federdruckbremse (FDB) nach einem der voranstehenden Ansprüche,
**dadurch gekennzeichnet, dass** die Federdruckbremse (FDB) in Vertikalachsen, Hebezeugen oder Personenaufzügen zum Einsatz kommt.

8. Federdruckbremse (FDB) nach einem der voranstehenden Ansprüche,
**dadurch gekennzeichnet, dass** die Federdruckbremse (FDB) konzentrisch zur Rotationsachse (A) des abzubremsenden Rotors (4) angeordnet ist.

9. Federdruckbremse (FDB) nach einem der voranstehenden Ansprüche,
**dadurch gekennzeichnet, dass** Spulenträger (1) und Ankerscheibe (3) der Federdruckbremse (FDB) rund, oval, quadratisch oder rechteckig ausgeführt und seitlich versetzt zur Rotationsachse (A) des abzubremsenden Rotors (4) angeordnet sind.

10. Federdruckbremse (FDB) nach einem der voranstehenden Ansprüche,
**dadurch gekennzeichnet, dass** die Federdruckbremse (FDB) in Form einer Bremszange nach der Bauart einer klassischen Scheibenbremse am Umfang des abzubremsenden Rotors (4) angeordnet ist.

## Claims

1. Quiescent current-actuated spring pressure brake (FDB) comprising a rotor (4) to be braked and means for monitoring a switched status, with the axial stroke occurring during a switching cycle of the armature disc (3) of said spring pressure brake being scanned by a mechanical microswitch (6) or a no-contact proximity switch integrated in the spring pressure brake and fixedly coupled with the stationary portion thereof, and with said microswitch or proximity switch cooperating with a reference point positioned on armature disc (3), **characterized in that** the reference point is provided on an adjustable lever/beam on the armature disc, said lever/beam having its one end fixedly coupled to said armature disc (3) of the spring pressure brake and having its opposite end configured to be adjustable in the direction of movement of the armature disc, and with the reference point being disposed on said lever/beam between the two ends thereof.

2. Spring pressure brake (FDB) as claimed in claim 1, **characterized by** an internally threaded hole extending through the opposite adjustable end of said lever/beam in the direction of movement of armature disc (3), said hole receiving an displaceable adjustment screw for setting the position/flexed position of said lever/beam in dependence on the threaded-in position of said adjustment screw.

3. Spring pressure brake (FDB) as claimed in claim 1 or 2, **characterized in that** lever (9) is coupled at its one end with armature disc (3) by means of a securing element, preferably a retaining screw (10).

4. Spring pressure brake (FDB) as claimed in claim 1 or 2, **characterized in that** lever (9) is coupled at its one end to armature disc (3) by a method such as welding, crimping or adhesive bonding.

5. Spring pressure brake (FDB) as claimed in any one of the preceding claims, **characterized in that** lever (9) is formed to be integral with armature disc (3) and is formed by slit means (11) in armature disc (3) or partly separated therefrom by said slit means.

6. Spring pressure brake (FDB) as claimed in any one of the preceding claims, **characterized by** being opened by electromagnetic means against the force exerted by springs (2).

7. Spring pressure brake (FDB) as claimed in any one of the preceding claims, **characterized by** being used in vertical lifting means, material lifting equipment or passenger elevators.

8. Spring pressure brake (FDB) as claimed in any one of the preceding claims, **characterized in that** said spring pressure brake is disposed in a concentric relationship with respect to the axis of rotation (A) of the rotor (4) to be braked.

9. Spring pressure brake (FDB) as claimed in any one of the preceding claims, **characterized in that** coil support (1) and armature disc (3) of said spring pressure brake is oval, square or rectangular in shape and is disposed in a position laterally offset from axis of rotation (A) of the rotor (4) to be braked.

10. Spring pressure brake (FDB) as claimed in any one of the preceding claims, **characterized in that** said spring pressure brake is positioned along the periphery of the rotor (4) to be braked in the form of a caliper-type brake in the manner of a classical disc brake.

## Revendications

1. Frein à pression de ressort (FDB) actionné par courant de repos, comprenant un rotor (4) à ralentir par freinage et un arrangement pour la surveillance d'état de commutation, la course axiale du disque d'induit (3) du frein à pression de ressort apparaissant lors d'un cycle de commutation du frein à pression de ressort et étant balayée par un microcommutateur (6) mécanique intégré dans le frein à pression de ressort et relié fixement à la partie stationnaire du frein à pression de ressort ou un commutateur de proximité sans contact, le commutateur respectif coopérant avec un point de référence sur le disque d'induit (3),
**caractérisé en ce que** le point de référence est disposé sur un levier/une poutre ajustable sur le disque d'induit, lequel/laquelle est relié(e) à l'une de ses extrémités fixement au disque d'induit (3) du frein à pression de ressort et qui est réalisé(e) à son extrémité opposée de manière à pouvoir être ajusté(e) dans la direction de déplacement du disque d'induit, et le point de référence étant disposé sur le levier/la poutre entre ses deux extrémités.

2. Frein à pression de ressort (FDB) selon la revendication 1,
**caractérisé en ce qu'**est réalisé, à l'extrémité opposée pouvant être ajustée, du levier/de la poutre, un alésage fileté s'étendant dans la direction de déplacement du disque d'induit (3), dans lequel est prévue une vis de réglage pouvant être ajustée qui détermine la position/la position de flexion du levier/de la poutre en fonction de la position de vissage de la vis de réglage.

3. Frein à pression de ressort (FDB) selon la revendication 1 ou 2,
**caractérisé en ce que** le levier (9) est relié à l'une de ses extrémités par un élément de fixation, de préférence par une vis de retenue (10), au disque d'induit (3).

4. Frein à pression de ressort (FDB) selon la revendication 1 ou 2,
**caractérisé en ce que** le levier (9) est relié à l'une de ses extrémités par un procédé d'assemblage, tel que soudage, sertissage ou collage, au disque d'induit (3).

5. Frein à pression de ressort (FDB) selon l'une des revendications précédentes,
**caractérisé en ce que** le levier (9) est réalisé en une seule partie avec le disque d'induit (3), et **en ce que** le levier (9) est constitué d'une structure à entailles (11) du disque d'induit ou en est séparé en partie.

6. Frein à pression par ressort (FDB) selon l'une des revendications précédentes,
**caractérisé en ce que** le frein à pression par ressort (FDB) est ouvert par un électroaimant à l'encontre de la force des ressorts (2).

7. Frein à pression de ressort (FDB) selon l'une des revendications précédentes,
**caractérisé en ce que** le frein à pression de ressort (FDB) est utilisé dans des essieux verticaux, des engins de levage ou des monte-personnes.

8. Frein à pression de ressort (FDB) selon l'une des revendications précédentes,
**caractérisé en ce que** le frein à pression de ressort (FDB) est disposé concentriquement par rapport à l'axe de rotation (A) du rotor (4) à ralentir par freinage.

9. Frein à pression de ressort (FDB) selon l'une des revendications précédentes,
**caractérisé en ce que** des supports de bobine (1) et le disque d'induit (3) du frein à pression de ressort (FDB) sont réalisés de manière arrondie, ovale, carrée ou rectangulaire et sont disposés de manière décalée latéralement par rapport à l'axe de rotation (A) du rotor (4) à ralentir par freinage.

10. Frein à pression de ressort (FDB) selon l'une des revendications précédentes,
**caractérisé en ce que** le frein à pression de ressort (FDB) est agencé sous forme d'un étrier de freinage à la façon d'un frein à disque classique à la périphérie du rotor (4) à ralentir par freinage.
